# EUROPEAN PATENT SPECIFICATION

(11) **EP 0 596 916 B1**
(45) Date of publication and mention of the grant of the patent: **22.11.1995**
(21) Application number: 92915285.8
(22) Date of filing: 14.07.1992
(51) Int. Cl.: G01F 11/26, G01F 11/08

(54) **DOSE DISPENSER**
DOSIERVORRICHTUNG
DOSEUR

(30) Priority: 15.07.1991 GB 9115217
(43) Date of publication of application: 18.05.1994
(73) Proprietor: COURTAULDS PACKAGING LIMITED, Colchester, Essex CO4 4QR (GB)
(72) Inventor: VON SCHUCKMANN, Alfred, Everhard, Friedrich, D-4178 Kevelaer 2 (DE)
(74) Representative: Newby, John Ross
(86) International application number: GB9201286
(87) International publication number: WO9302339

(56) References cited:
- EP-A- 0 274 256
- EP-A- 0 421 113
- DE-A- 3 014 267
- DE-U- 8 502 526
- US-A- 4 807 785

## Description

### Technical Field

This invention relates to the dispensing of doses of fluid material from a body of fluid material held in a container using a dose dispenser located in the outlet of the container.

### Description of Prior Art

The simplest form of dose dispenser uses the cap of the container as a dose measure. The potential for spillage and the relative inaccuracy of this method has led to a search for alternative methods. In one of these, an open-topped measuring cup is moulded in the neck of a flexible-walled bottle and is filled with liquid from the bottle through a dip tube which opens into the cup below its rim. The bottle is squeezed in an upright position to express liquid into the cup in an amount in excess of the desired dose. The squeezing pressure is then released whereupon liquid in the cup above the dip tube outlet is sucked back into the tube. The measured dose of liquid is then poured out of the cup.

In WO 92/10727 there is described an improved dose dispenser in which a piston device can move within a dosing chamber in response to increased fluid pressure within the container to which the dose dispenser is fitted. The dosing chamber is filled by inversion of the container and then the piston device is caused to move outwards along the dosing chamber by squeezing the flexible wall of the container. This outward movement of the piston device successively alters the open/closed configuration of the inlet and outlet of the dosing chamber from inlet open/outlet closed (dose filling) through inlet closed/outlet closed (dose measuring) to inlet closed/outlet open (dose dispensing).

EP-A-0421113, DE-A-3014267 and DE-U-8502526 describe dose dispensers having the features of the preamble of claim 1.

Further development has now produced a new, improved design of dose dispenser which gives a more positive action in use and which facilitates manufacture and assembly.

### Summary of the Invention

According to this invention, a dose dispenser for location in the outlet of a container of fluid material from which a dose of fluid material is to be dispensed comprises a dosing chamber having a cylindrical wall defining an internal volume and having spaced outlet and inlet ends defining respectively an outlet through which a dose of fluid material can be dispensed and an inlet through which fluid material may pass into the chamber from the container, a piston head moveable axially within the dosing chamber and dividing its internal volume into separated forward and rear volumes on opposite sides of the piston head of which the relative volumetric proportions change as the piston head moves within the dosing chamber, the piston head being moveable between a first position spaced from the outlet end through a second position approaching the outlet end to a third position at the outlet end at which third position the rear volume of the dosing chamber is opened to the outlet, and an inlet closure member which leaves the inlet open to the rear volume of the dosing chamber as the piston head moves from the first position towards the second position and closes the inlet when the piston head is in the second and third positions characterised in that in the first position the piston head is at the inlet end of the dosing chamber in engagement with and closing the inlet.

For multi-dose dispensing, the piston head of the dose dispenser is reciprocally moveable between the first and third positions.

The wall of the dosing chamber is cylindrical, with a circular cross-section preferred. The movement of the piston head between the first, second and third positions is axial of the cylindrical wall.

The piston head may be supported on an elongate member which extends through the inlet without closing it. The elongate member may be, for example, of cruciform cross-section compared with an inlet of circular cross-section. The inlet cloture member also may be supported on this elongate member but spaced from the piston head and located externally of the dosing chamber when the piston head is in the first position. The piston head and the inlet closure member may be spaced by a distance such that the inlet closure member moves into engagement with the inlet to close it as the piston head moves into the second position.

Further movement of the piston head from the second to the third position may be permitted by having the inlet closure member engage with the inlet to close it as a sliding engagement in the direction of movement of the piston head. Thus, the inlet may be defined by a wall, for example a cylindrical wall, and the inlet closure member may enter the inlet and close it by sliding engagement with the wall of the inlet. The elongate member may also slidingly engage the wall of the inlet whilst the piston head moves from the first position to the second position to maintain alignment of the elongate member in the direction of that movement.

The piston head separates the forward and rear volumes within the dosing chamber during a dispensing operation. When the piston head is in the first position, it engages the inlet of the dosing chamber to close it. This allows the provision of a seal against leakage of the fluid material from the container.

Movement of the piston head from the first position through the second position to the third position, may be in response to increased fluid pressure induced within the container to which the dose dispenser is fitted. The piston head may have a rear surface i.e. the surface facing towards the rear volume of the dosing chamber, against which the increased fluid pressure within the container can be applied to cause the specified movement of the piston head.

The invention includes a dose dispenser and container combination in which the dose dispenser is located in the outlet of a container for fluid material. In a preferred arrangement, the dose dispenser is a snap fit and/or a friction fit within the outlet of the container. It is also possible to make the dosing chamber of the dose dispenser an integral moulding with the outlet of the container, for example as part of the neck finish of a bottle, if this is desired.

The container preferably has a flexible wall, for example of plastics material, so that an increase in fluid pressure within the container can be induced by squeezing the flexible wall of the container. The container may be a thermoplastic moulding, for example a polyester bottle.

The outlet of the dosing chamber may be defined by the wall of the dosing chamber being cut-away in part at its outlet end. This allows the piston head to be retained in contact with the remaining part of the wall at the outlet end when it is in the third position whilst the rear volume of the dosing chamber is opened to the outlet. A suitable arrangement is provided by the outlet end having a castellated shape.

At the outlet end, the wall of the dosing chamber may be surrounded by an outer wall having a first part which is opposite to and spaced from the outlet and a second part which is joined to the wall of the dosing chamber. This outer wall allows the provision of a continuous pouring lip in case the cut-away outlet end of the dosing chamber makes pouring difficult. It also allows the provision of a rebated portion where it joins the wall of the dosing chamber to provide accurate location of the dose dispenser in the outlet of a container.

The dose dispenser and container combination of the invention may also include a closure cap for the container outlet.

Blow-moulded containers are normally made from a moulded preform incorporating a first portion which will be the outlet of the container, for example in the form of a tubular neck, and an integral second portion. This second portion is expanded by a blow-moulding step to form the body of the container integrally attached to the preformed outlet. In moulding the preform, for example by injection moulding, the first portion, which will become the outlet of the container may be moulded so that the dosing chamber of the dose-dispenser according to the invention is moulded as an integral part of this first portion.

The piston head, elongate member and inlet closure member of the dose dispenser may be a one piece moulding which is inserted into the dosing chamber. This applies whether the latter is moulded integrally with the outlet of the container or is a separate item. For ease of filling, such insertion may be carried out after the container has been filled with the fluid to be dispensed, but prior to the fitting of a closure cap.

The invention further includes a method of dispensing a dose of fluid material from a body of fluid material held within a container of a dose dispenser and container combination according to the invention in which the container has a flexible wall, preferably of plastics material, which can be squeezed to induce increased internal fluid pressure within the container characterised by inverting the container, squeezing the flexible wall of the container to induce increased fluid pressure within the container and thereby to move the piston head sequentially from the first position through the second position to the third position so that in that sequence fluid material flows through the inlet to fill the expanding rear volume of the dosing chamber as the piston head moves from the first position to the second position which flow is stopped when the inlet is closed by the inlet closure member so that a measured dose of fluid material is contained in the enclosed rear volume of the dosing chamber and when the piston head moves into the third position, the measured dose of fluid material runs out of the rear volume of the dosing chamber through the outlet and is thereby dispensed.

When the piston head of the dose dispenser is reciprocally moveable between the first and third positions to allow multi-dose dispensing, then release of the flexible wall of the container from squeezing will cause a reduction of fluid pressure within the container which will cause the piston head to return from the third position to the first position. The dose dispenser is then ready for the dispensing of a further dose.

Liquids are the preferred fluid materials for dispensing using the dose dispenser of the invention.

The invention will now be further described, by way of example, with reference to the accompanying drawings, in which:-

### Brief Description of the Drawings

Figure 1 is a schematic section in elevation of a dose dispenser according to the invention located in the outlet neck of an upright flexible-walled bottle (shown in part only) containing a liquid to be dispensed and showing the piston head in the first position;
Figure 2 shows the same section as Figure 1 but with the bottle cap removed and the bottle inverted at an angle and squeezed to force the piston head towards the outlet under the induced increase in internal fluid pressure;
Figure 3 shows the same section as Figure 2 in which the piston head has moved to the second position to define a measured dose of liquid;
Figure 4 shows the same section as Figure 3 in which the piston head has moved to the third position and the measured dose of liquid is being dispensed; and
Figure 5 is a cross-section on the line V....V in Figure 1 showing the cross-sectional shape of the elongate member.

### Description of Preferred Embodiment

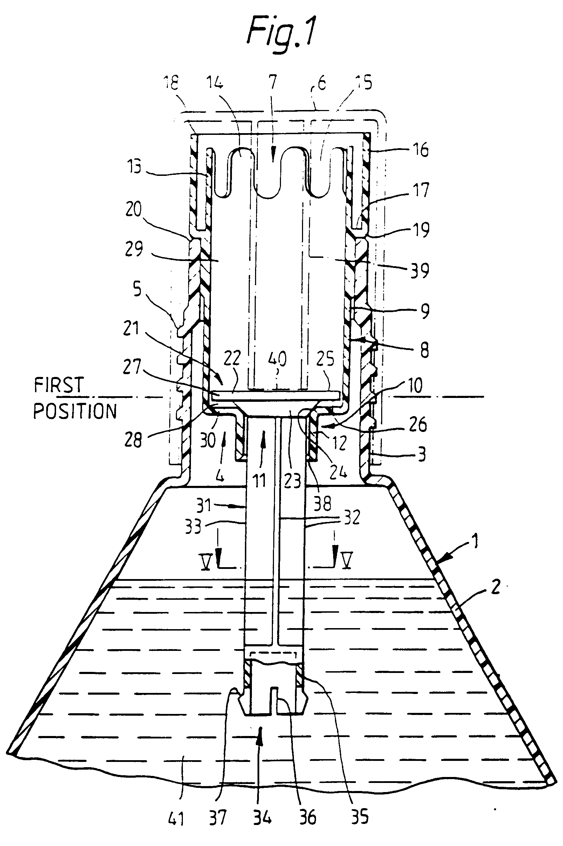

Referring to Figure 1, a bottle 1 (shown in part only) has a flexible wall 2 and a cylindrical neck 3 which defines an outlet 4 and which has an external screw thread 5 for securing an internally-threaded closure cap 6 (shown in dotted outline).

A dose dispenser 7 comprises a dosing chamber 8 having a cylindrical wall 9 which is located as a close friction fit within the neck 3 of the bottle 1. The dosing chamber 8 has an inlet end 10 which is located within the neck 3 of the bottle 1 and projects towards the interior of the bottle 1. The inlet 11 of the dosing chamber 8 is defined by a cylindrical wall 12 which is coaxial with the wall 9 of the dosing chamber 8 and of reduced diameter compared with the wall 9.

The outlet end 13 of the dosing chamber 8 projects out of the neck 3 of the bottle 1. It is open-ended and of castellated form so that the cut-away parts between the castellations 14 comprise an outlet 15.

An outer wall 16 surrounds and is spaced from the wall 9 at the outlet end and is joined to that wall 9 at its lower end 17. This outer wall 16 provides a continuous pouring lip 18 and a rebate 19 at the lower end 17 which seats on a top surface 20 of the neck 3 of the bottle 1 and locates the dose dispenser 7 in the desired position.

A piston head 21 comprises a circular disc part 22 surmounting a frusto-conical part 23 of lesser diameter having a peripheral surface 24. The disc part 22 of the piston head 21 has a forward surface 2, a rear surface 26 and a peripheral edge 27. This edge slides along the internal surface of the cylindrical wall 9 of the dosing chamber 8 and divides the dosing chamber 8 into a rear volume 28 and a forward volume 29. It is not necessary for the edge 27 to engage the internal surface of the cylindrical wall 9 as a fit which is a liquid-tight seal although it can be so for critical applications. In most cases, the speed at which the dose dispenser of the invention operates means that any liquid seepage across the piston head is minimal and has no significance for dose accuracy.

The peripheral surface 24 of the frusto-conical part 23 of the piston head 21 seats in a mating chamfered surface 30 in the wall 12 of the inlet 11 when the piston head is in the first position shown in Figure 1.

The piston head 21 is supported on an elongate member 31 having four limbs 32 which give the member 31 a cruciform cross-section. The outer edges 33 of the limbs 32 engage the inner surface of the wall 12 of the inlet in a sliding fit.

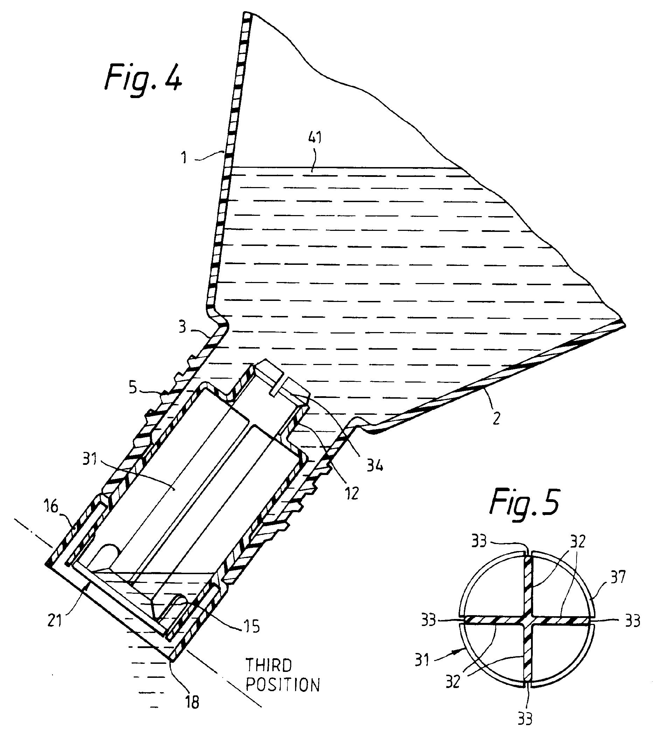

An inlet closure member 34 is supported on the opposite end of the elongate member 31 and has a cylindrical wall 35 giving it the shape of an inverted cup. The outer surface of the cylindrical wall 35 is dimensioned to make it a sliding fit within the inner surface of the wall 12 of the inlet 11. Four cut-outs 36 in the wall 35 impart a degree of springiness which facilitates assembly. A chamfered external bead 37 at the end of the wall 35 butts against an internal chamfer 38 at the end of the wall 12 of the inlet 11 when the inlet closure member 34 fully enters the inlet 11 and prevents further movement of the piston head 21 beyond the third position as shown in Figure 4.

The closure cap 6 has an axial tubular spigot 39 of which the open end 40 seats against the forward surface 25 of the piston head 21 when the cap 6 is fully screwed onto the neck 3 of the bottle 1. This pushes the piston head 21 down so that the mating surfaces 24 and 30 are pressed together to form a fluid-tight seal.

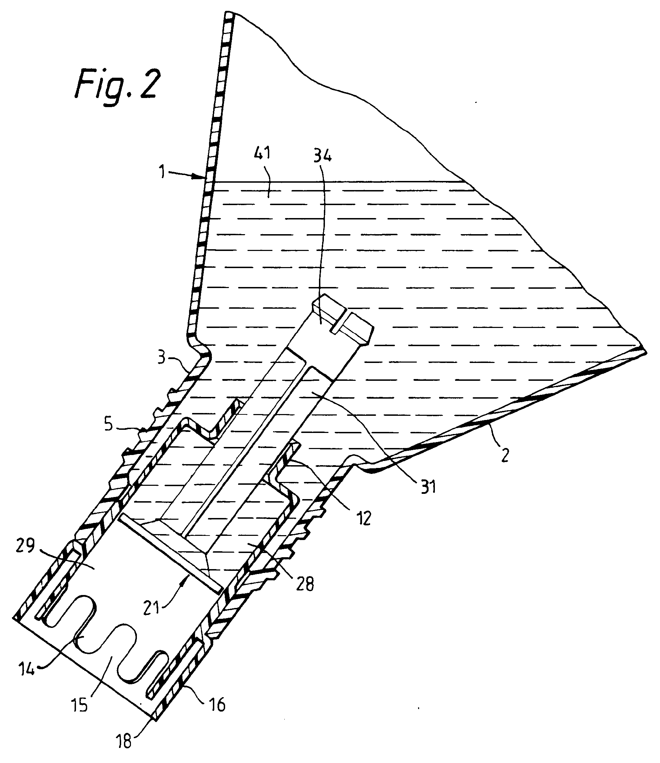

After inversion of the bottle 1 (e.g. at the angle shown in Figure 2) and squeezing of its flexible wall 2, the increased fluid pressure thereby induced within the bottle 1 is exerted on the rear surface 26 of the piston head 21. The piston head 21 is pushed along the dosing chamber 8 as shown, opening the inlet 11 and allowing fluid material (in this case the liquid 41) within the bottle 1 to flow into the rear volume 28 of the dosing chamber 8. As the piston head 21 moves along the dosing chamber 8, the rear volume 28 increases in volume proportionally to the decrease in volume of the forward volume 29 of the dosing chamber 8 and so is filled with a progressively increasing volume of liquid 41.

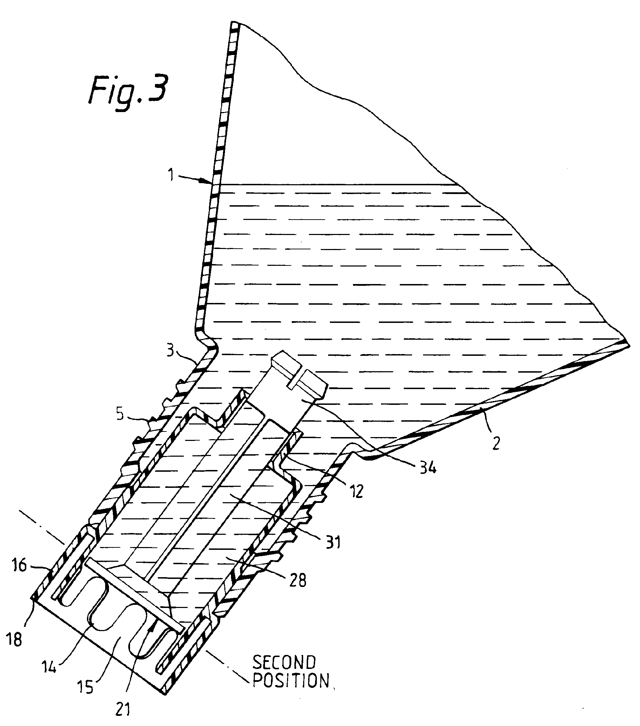

Movement of the piston head 21 continues along the dosing chamber 8 until the piston head 21 reaches the second position as shown in Figure 3 when the inlet closure member 34 engages the wall 12 of the inlet 11 to close it. With the piston head in the second position, no further liquid 41 can flow into the dosing chamber 8 and so the volume of liquid 41 in the rear volume 28 of the dosing chamber 8 is the measured dose to be dispensed.

Figure 4 shows the completion of the outward movement of the piston head 21 when in the third position, further outward movement being prevented by abutment of the chamfered bead 37 on the inlet closure member 34 against the chamfered surface 38 at the end of the wall 12 of the inlet 11. In the third position, as shown, the piston head 21 has moved along the castellations 14 of the outlet end 13 of the dosing chamber 8 so as to expose the outlet 15 to the rear volume 28 of the dosing chamber 8 and allow the measured dose of liquid 41 to flow out over the pouring lip 18 of the outer wall 16 and be dispensed.

When the flexible wall 2 of the bottle 1 is released from the squeezing pressure, the resulting reduction in internal fluid pressure within the bottle 1 to below atmospheric pressure causes the piston head 21 to be drawn back into the first position. A further measured dose of liquid 41 may then be dispensed by a repeat procedure if desired. Alternatively, the closure cap 6 may be screwed back onto the bottle 1 before it is returned to storage.

The dosing chamber 8 is preferably a one-piece plastics moulding. Polypropylene. is a suitable material, The piston head 21, the elongate member 31 and the inlet closure member 34 are also preferably a one-piece plastics moulding. Polypropylene is, again, a suitable material.

## Claims

1. A dose dispenser for location in the outlet of a container of fluid material from which a dose of fluid material is to be dispensed comprising a dosing chamber having a cylindrical wall defining an internal volume and having spaced outlet and inlet ends defining respectively an outlet through which a dose of fluid material can be dispensed and an inlet through which fluid material may pass into the dosing chamber from the container, a piston head (21) moveable axially within the dosing chamber and dividing its internal volume into separated forward and rear volumes on opposite sides of the piston head of which the relative volumetric proportions change as the piston head moves within the dosing chamber, the piston head being moveable between a first position spaced from the outlet end through a second position approaching the outlet end to a third position at the outlet end at which third position the rear volume of the dosing chamber is opened to the outlet, and an inlet closure member (34) which leaves the inlet open to the rear volume of the dosing chamber as the piston head moves from the first position towards the second position and closes the inlet when the piston head is in the second and third positions, characterised in that in the first position the piston head is at the inlet end of the dosing chamber in engagement with and closing the inlet.

2. A dose dispenser as claimed in claim 1 characterised in that the inlet is defined by a cylindrical wall of reduced diameter compared with that of the cylindrical wall of the dosing chamber and the piston head engages the cylindrical wall of the inlet to close the inlet when the piston head is in the first position.

3. A dose dispenser as claimed in claim 2 characterised in that the piston head has a frusto-conical part facing towards the rear volume of the dosing chamber and the cylindrical wall of the inlet has a chamfered surface against which the frusto-conical part of the piston head seats when the piston is in the first position so as to close the inlet.

4. A dose dispenser as claimed in claim 1 characterised by an elongate member which supports the piston head and the inlet closure member in spaced relationship, the elongate member extending axially of the dosing chamber and through the inlet without closing the inlet, the inlet closure member being located externally of the dosing chamber when the piston head is in the first position and being spaced from the piston head by a distance which allows it to move into engagement with and close the inlet as the piston head moves into the second position.

5. A dose dispenser as claimed in claim 4 characterised in that the elongate member which supports the piston head and the inlet closure member and extends through the inlet slidingly engages the cylindrical wall of the inlet without closing the inlet whilst the piston head moves between the first position and the second position so as to maintain axial alignment of the elongate member.

6. A dose dispenser as claimed in claim 1 characterised in that the piston head is responsive when the dose dispenser is located in the outlet of a container of fluid material to increased fluid pressure induced within the container to move from the first position through the second position to the third position.

7. A dose dispenser as claimed in claim 6 characterised in that the piston head has a rear surface against which an increased fluid pressure induced within the container can be applied to cause movement of the piston head from the first position through the second position to the third position.

8. A dose dispenser and container combination characterised by a dose dispenser as claimed in claim 1 in combination with a container for fluid material having an outlet in which the dose dispenser is located.

9. A dose dispenser and container combination as claimed in claim 8 characterised in that the container has a flexible wall, preferably of plastics material, which can be squeezed to induce increased internal fluid pressure within the container.

10. A dose dispenser and container combination as claimed in claim 8 characterised in that the dose dispenser is an integral moulding with the outlet of the container.

11. A dose dispenser and container combination as claimed in claim 10 characterised in that the container is a blow-moulded container.

12. A dose dispenser and container combination as claimed in claim 8 characterised by including a closure cap which secures onto the container outlet, the closure cap having an internal spigot which extends axially into the dosing chamber when the closure cap is applied to the container outlet and pushes the piston head into sealing engagement with the inlet of the dosing chamber when the closure cap is fully secured onto the container outlet.

13. A method of dispensing a dose of fluid material from a body of fluid material held within a container of a dose dispenser and container combination as claimed in claim 8 characterised by, inverting the container, squeezing the flexible wall of the container to induce increased fluid pressure within the container and thereby to move the piston head sequentially from the first position through the second position to the third position so that in that sequence fluid material flows through the inlet to fill the expanding rear volume of the dosing chamber as the piston head moves from the first position to the second position which flow is stopped when the inlet is closed by the inlet closure member so that a measured dose of fluid material is contained in the enclosed rear volume of the dosing chamber and when the piston head moves into the third position, the measured dose of fluid material runs out of the rear volume of the dosing chamber through the outlet and is thereby dispensed, releasing the flexible wall of the container from squeezing to decrease the fluid pressure within the container and so cause the piston head to return from the third position to the first position and thereby close the inlet to the dosing chamber.

## Patentansprüche

1. Dosiervorrichtung zur Positionierung im Auslaß eines Behälters mit einem Fluidmaterial, aus dem eine Fluidmaterialdosis ausgegeben werden soll, die folgendes umfaßt: eine Dosierkammer mit einer ein Innenvolumen definierenden zylindrischen Wand, die ein voneinander beabstandetes Auslaß- und Einlaßende aufweist, welche einen Auslaß, durch den eine Fluidmaterialdosis ausgegeben werden kann, bzw. einen Einlaß, durch den Fluidmaterial aus dem Behälter in die Rammer gelangen kann, definieren, einen in Axialrichtung in der Dosierkammer beweglichen Kolbenboden (21), der sein Innenvolumen auf gegenüberliegenden Seiten des Kolbenbodens in ein getrenntes vorderes und hinteres Volumen unterteilt, deren relative Volumenanteile sich bei sich in der Dosierkammer bewegendem Kolbenboden ändern, wobei sich der Kolbenboden zwischen einer von dem Auslaßende beabstandeten ersten Stellung über eine sich dem Auslaßende annähernde zweite Stellung bis in eine dritte Stellung am Auslaßende, bei der das rückwärtige Volumen der Dosierkammer zum Auslaß geöffnet ist, bewegen kann, und ein Einlaßschließglied (34), das den Einlaß zum hinteren Volumen der Dosierkammer geöffnet läßt, während sich der Kolbenboden von der ersten Stellung zur zweiten Stellung hin bewegt, und den Einlaß schließt, wenn sich der Kolbenboden in der zweiten und dritten Stellung befindet, dadurch gekennzeichnet, daß sich der Kolbenboden in der ersten Stellung am Einlaßende der Dosierkammer in Eingriff mit dem Einlaß befindet und diesen schließt.

2. Dosiervorrichtung nach Anspruch 1, dadurch gekennzeichnet, daß der Einlaß durch eine zylindrische Wand mit im Vergleich zum Durchmesser der zylindrischen Wand der Dosierkammer vermindertem Durchmesser definiert wird und der Kolbenboden in die zylindrische Wand des Einlasses eingreift, um den Einlaß zu schließen, wenn sich der Kolbenboden in der ersten Stellung befindet.

3. Dosiervorrichtung nach Anspruch 2, dadurch gekennzeichnet, daß der Kolbenboden ein kegelstumpfförmiges Teil, das zum hinteren Volumen der Dosierkammer weist, und die zylindrische Wand des Einlasses eine abgeschrägte Fläche aufweist, an die das kegelstumpfförmige Teil des Kolbenbodens anliegt, wenn sich der Kolben in der ersten Stellung befindet, um den Einlaß zu schließen.

4. Dosiervorrichtung nach Anspruch 1, gekennzeichnet durch ein längliches Glied, das den Kolbenboden und das Einlaßschließglied in voneinander beabstandeter Beziehung stützt, wobei sich das längliche Glied axial der Dosierkammer und durch den Einlaß erstreckt, ohne diesen zu schließen, und wobei das Einlaßschließglied außerhalb der Dosierkammer angeordnet ist, wenn sich der Kolbenboden in der ersten Stellung befindet, und sich in einem derartigen Abstand vom Kolbenboden befindet, der ermöglicht, daß es mit dem Einlaß in Eingriff bewegt werden und ihn schließen kann, während sich der Kolbenboden in die zweite Stellung bewegt.

5. Dosiervorrichtung nach Anspruch 4, dadurch gekennzeichnet, daß das längliche Glied, das den Kolbenboden und das Einlaßschließglied stützt und sich durch den Einlaß erstreckt, die zylindrische Wand des Einlasses gleitend in Eingriff nimmt, ohne den Einlaß zu schließen, während sich der Kolbenboden zwischen der ersten Stellung und der zweiten Stellung bewegt, um eine axiale Ausrichtung des länglichen Glieds aufrechtzuerhalten.

6. Dosiervorrichtung nach Anspruch 1, dadurch gekennzeichnet, daß der Kolbenboden bei Anordnung der Dosiervorrichtung im Auslaß eines Behälters mit Fluidmaterial auf im Behälter bewirkten erhöhten Fluiddruck so reagiert, daß er sich von der ersten Stellung über die zweite Stellung in die dritte Stellung bewegt.

7. Dosiervorrichtung nach Anspruch 6, dadurch gekennzeichnet, daß der Kolbenboden eine rückwärtige Fläche aufweist, die mit einem im Behälter bewirkten erhöhten Fluiddruck beaufschlagt werden kann, um die Bewegung des Kolbenbodens von der ersten Stellung über die zweite Stellung in die dritte Stellung zu bewirken.

8. Kombination aus Dosiervorrichtung und Behälter, gekennzeichnet durch eine Dosiervorrichtung nach Anspruch 1 in Kombination mit einem Behälter für Fluidmaterial mit einem Auslaß, in dem die Dosiervorrichtung angeordnet ist.

9. Kombination aus Dosiervorrichtung und Behälter nach Anspruch 8, dadurch gekennzeichnet, daß der Behälter eine biegsame Wand, die vorzugsweise aus einem Kunststoffmaterial besteht, aufweist, die zusammengedrückt werden kann, um im Behälter einen erhöhten inneren Fluiddruck zu bewirken.

10. Kombination aus Dosiervorrichtung und Behälter nach Anspruch 8, dadurch gekennzeichnet, daß es sich bei der Dosiervorrichtung um ein mit dem Auslaß des Behälters einstückig ausgebildetes Formteil handelt.

11. Kombination aus Dosiervorrichtung und Behälter nach Anspruch 10, dadurch gekennzeichnet, daß es sich bei dem Behälter um einen blasgeformten Behälter handelt.

12. Kombination aus Dosiervorrichtung und Behälter nach Anspruch 8, gekennzeichnet durch Aufweisen einer Verschlußkappe, die am Behälterauslaß befestigt wird, wobei die Verschlußkappe einen Innenzapfen aufweist, der sich axial in die Dosierkammer erstreckt, wenn die Verschlußkappe am Behälterauslaß angebracht ist, und den Kolbenboden in abdichtenden Eingriff mit dem Einlaß der Dosierkammer schiebt, wenn die Verschlußkappe vollständig am Behälterauslaß befestigt ist.

13. Verfahren zur Ausgabe einer Dosis an Fluidmaterial aus einer im Behälter einer Kombination aus Dosiervorrichtung und Behälter nach Anspruch 8 untergebrachten Fluidmaterialmasse, gekennzeichnet durch Umdrehen des Behälters, Zusammendrücken der biegsamen Wand des Behälters zur Bewirkung eines erhöhten Fluiddrucks im Behälter und dadurch Bewegung des Kolbenbodens nacheinander von der ersten Stellung über die zweite Stellung in die dritte Stellung, so daß das Fluidmaterial in dieser Folge durch den Einlaß strömt, um das sich ausweitende hintere Volumen der Dosierkammer zu füllen, während sich der Kolbenboden von der ersten Stellung in die zweite Stellung bewegt, wobei dieses Strömen gestoppt wird, wenn der Einlaß durch das Einlaßschließglied geschlossen wird, so daß im eingeschlossenen hinteren Volumen der Dosierkammer eine abgemessene Fluidmaterialdosis enthalten ist, die aus dem hinteren Volumen der Dosierkammer durch den Auslaß herausläuft und dadurch ausgegeben wird, wenn sich der Kolbenboden in die dritte Stellung bewegt, und Entlasten der biegsamen Wand des Behälters vom Zusammendrücken, um den Fluiddruck im Behälter zu vermindern und damit zu bewirken, daß der Kolbenboden aus der dritten Stellung in die erste Stellung zurückkehrt und dadurch den Einlaß der Dosierkammer schließt.

## Revendications

1. Doseur destiné à être placé dans la sortie d'un récipient de produit fluide depuis lequel une dose de produit fluide doit être distribuée, comprenant une chambre de dosage ayant une paroi cylindrique définissant un volume interne et ayant des extrémités de sortie et d'entrée espacées définissant respectivement une sortie par laquelle une dose de produit fluide peut être distribuée et une entrée par laquelle du produit fluide peut passer du récipient dans la chambre de dosage, une tête de piston (21) déplaçable axialement à l'intérieur de la chambre de dosage et divisant son volume interne en volumes séparés avant et arrière d'un côté et de l'autre de la tête de piston, les proportions volumétriques relatives de ces volumes changeant en fonction du déplacement de la tête de piston à l'intérieur de la chambre de dosage, la tête de piston étant déplaçable entre une première position espacée de l'extrémité de sortie, en passant par une seconde position plus proche de l'extrémité de sortie, et une troisième position à l'extrémité de sortie, troisième position à laquelle le volume arrière de la chambre de dosage est ouvert sur la sortie, et un organe (34) de fermeture de l'entrée qui laisse l'entrée ouverte sur le volume arrière de la chambre de dosage lorsque la tête de piston se déplace de la première position vers la seconde position, et ferme l'entrée lorsque la tête de piston est dans la seconde et la troisième positions, caractérisé en ce que dans la première position la tête de piston est à l'extrémité d'entrée de la chambre de dosage, en engagement avec l'entrée et la fermant.

2. Doseur selon la revendication 1, caractérisé en ce que l'entrée est définie par une paroi cylindrique de diamètre réduit par comparaison avec celui de la paroi cylindrique de la chambre de dosage et en ce que la tête de piston s'engage avec la paroi cylindrique de l'entrée pour fermer l'entrée lorsque la tête de piston est dans la première position.

3. Doseur selon la revendication 2, caractérisé en ce que la tête de piston a une partie tronconique tournée vers le volume arrière de la chambre de dosage et en ce que la paroi cylindrique de l'entrée a une surface chanfreinée contre laquelle la partie tronconique de la tête de piston repose lorsque le piston est dans la première position de manière à fermer l'entrée.

4. Doseur selon la revendication 1, caractérisé par un organe allongé qui supporte la tête de piston et l'organe de fermeture de l'entrée en relation espacée, l'organe allongé s'étendant axialement à la chambre de dosage et à travers l'entrée sans fermer l'entrée, l'organe de fermeture de l'entrée étant situé à l'extérieur de la chambre de dosage lorsque la tête de piston est dans la première position et étant espacé de la tête de piston d'une distance qui lui permet de se déplacer en engagement avec l'entrée et de la fermer lorsque la tête de piston se déplace dans la seconde position.

5. Doseur selon la revendication 4, caractérisé en ce que l'organe allongé qui supporte la tête de piston et l'organe de fermeture de l'entrée et s'étend à travers l'entrée s'engage par coulissement avec la paroi cylindrique de l'entrée sans fermer l'entrée tandis que la tête de piston se déplace entre la première position et la seconde position de manière à maintenir un alignement axial de l'organe allongé.

6. Doseur selon la revendication 1, caractérisé en ce que la tête de piston répond, lorsque le doseur est situé dans la sortie d'un récipient de produit fluide, à une pression de fluide accrue induite à l'intérieur du récipient, en se déplaçant de la première position, en passant par la seconde position, jusqu'à la troisième position.

7. Doseur selon la revendication 6, caractérisé en ce que la tête de piston a une surface arrière contre laquelle une pression de fluide accrue induite à l'intérieur du récipient peut s'exercer pour provoquer le déplacement de la tête de piston de la première position, en passant par la seconde position, jusqu'à la troisième position.

8. Combinaison de doseur et récipient, caractérisée par un doseur selon la revendication 1, en combinaison avec un récipient de produit fluide ayant une sortie dans laquelle est situé le doseur.

9. Combinaison de doseur et récipient selon la revendication 8, caractérisée en ce que le récipient a une paroi flexible, de préférence en matériau plastique, qui peut être pressée pour induire une pression de fluide interne accrue à l'intérieur du récipient.

10. Combinaison de doseur et récipient selon la revendication 8, caractérisée en ce que le doseur est un moulage intégral avec la sortie du récipient.

11. Combinaison de doseur et récipient selon la revendication 10, caractérisée en ce que le récipient est un récipient moulé par soufflage.

12. Combinaison de doseur et récipient selon la revendication 8, caractérisée par le fait qu'elle inclut un bouchon de fermeture qui se fixe sur la sortie du récipient, le bouchon de fermeture ayant un tourillon interne qui s'étend axialement dans la chambre de dosage lorsque le bouchon de fermeture est appliqué à la sortie du récipient et pousse la tête de piston en engagement hermétique avec l'entrée de la chambre de dosage lorsque le bouchon de fermeture est complètement fixé sur la sortie du récipient.

13. Méthode de distribution d'une dose de produit fluide provenant d'un corps de produit fluide contenu à l'intérieur d'un récipient d'une combinaison de doseur et récipient selon la revendication 8, caractérisée par le fait d'inverser le récipient, de presser la paroi flexible du récipient pour induire une pression de fluide accrue à l'intérieur du récipient et ainsi pour déplacer la tête de piston séquentiellement depuis la première position, en passant par la seconde position, jusqu'à la troisième position de sorte que dans cette séquence du produit fluide s'écoule à travers l'entrée pour remplir le volume arrière s'élargissant de la chambre de dosage au fur et à mesure que la tête de piston se déplace de la première position jusqu'à la seconde position, lequel écoulement est interrompu lorsque l'entrée est fermée par l'organe de fermeture de l'entrée de sorte qu'une dose mesurée de produit fluide est contenue dans le volume arrière clos de la chambre de dosage, et lorsque la tête de piston se déplace dans la troisième position, la dose mesurée de produit fluide s'écoule hors du volume arrière de la chambre de dosage à travers la sortie et est ainsi distribuée, relâchant la pression de la paroi flexible du récipient pour diminuer la pression de fluide à l'intérieur du récipient et donc pour causer le retour de la tête de piston de la troisième position jusqu'à la première position et fermer ainsi l'entrée dans la chambre de dosage.
